Europäisches Patentamt

European Patent Office

Office européen des brevets

(11) Publication number : **0 508 715 A1**

# EUROPEAN PATENT APPLICATION

(21) Application number : **92303057.1**

(22) Date of filing : **07.04.92**

(51) Int. Cl.⁵ : **G21C 3/17**

(30) Priority : **09.04.91 US 682288**

(43) Date of publication of application :
**14.10.92 Bulletin 92/42**

(84) Designated Contracting States :
**DE ES FR GB IT SE**

(71) Applicant : **GENERAL ELECTRIC COMPANY**
**1 River Road**
**Schenectady, NY 12345 (US)**

(72) Inventor : **Kocsi, William Stephen**
**107 Seapath Estates**
**Wrightsville Beach, North Carolina 28480 (US)**

(74) Representative : **Pratt, Richard Wilson**
**London Patent Operation G.E. Technical**
**Services Co. Inc. Essex House 12/13 Essex**
**Street**
**London WC2R 3AA (GB)**

(54) **Getter containing nuclear fuel element.**

(57)   A nuclear fission fuel element including a getter material within a plenum area of the fuel container for absorbing and retaining fission produced gases. The getter material in particulate form is retained within a vessel provided with a porous component to enable fluid communication between the plenum area of the fuel container and the getter retaining vessel.

FIG. I

EP 0 508 715 A1

## FIELD OF THE INVENTION

This invention relates to nuclear fission fuel elements for service in the fuel core of nuclear fission reactor plants. The invention is directed to an improvement in such nuclear fuel elements containing a getter material for absorbing and retaining fission produced gases emitted by the fissioning fuel within the fuel container during operation of the nuclear reactor.

## BACKGROUND OF THE INVENTION

Nuclear fuel elements designed for service in typical commercial power generating, nuclear fission reactor plants comprise elongated containers, consisting of long tube-like units, which are sealed at each end. Fissionable nuclear fuel, conventionally in the form of cylindrical pellets are stacked end on end within the tube-like container. The fissionable fuel is thus confined within the sealed containers to isolate it from contact with the coolant and thereby preclude any reaction between the coolant and the fuel or any fuel fission products, and also to minimize the possibility of contaminating the circulating coolant with radioactive material form the fuel or resulting fission products.

The pellets of fissionable nuclear fuel, stacked one on one in a column forming the body of fuel within the sealed tube-like container, do not fill the entire length of the container in order to provide for a plenum area in the upper portion within the container. This upper plenum extending above the fuel pellet column or body provides an area for the collection and retention of fission produced gases emitted from the fuel undergoing fission reactions. A spring like means is commonly employed spanning the plenum from the upper end closure to the top of the fuel column to hold the column of pellets in position.

Conventional fissionable fuel elements for commercial power generating, water cooled nuclear fission reactor plants typically utilize oxide of uranium as the fissionable fuel material. However, in some instances a minor portion of the uranium may be replaced by oxides of plutonium and/or thorium. Also, the fuel material can include small amounts of a neutron absorbing agent, or so-called poison, such as gadolinium to enhance operating efficiency and longevity.

The tube-like fuel container, sometimes refereed to as cladding, for commercial power generating, nuclear fission reactors are conventionally constructed of an alloy of zirconium such as the commercial alloy zircaloy-2 disclosed in U.S. Letters Patent No. 2,772,964. Such fuel containers have also been constructed of stainless steel alloys.

As noted in the relevant prior art, there is considered to be some possibility of fission produced gases from the fuel having an adverse or negative effect upon the fuel containers. Additionally, even water vapor at relatively high temperature levels can have a harmful effect upon zirconium alloys. For example, water or water vapor at relatively high temperatures can react with zirconium metal or its contents in alloys thereof, producing hydrogen which in turn reacts with the zirconium causing its embrittlement.

Such negative effects of fission produced gases and/or water vapor can be exaggerated by the gases emitted from the fuel increasing pressures within the sealed fuel container unit and the high temperatures within the reactor pressure vessel which introduces physical stresses in the fuel container unit which accelerates chemical attack from the gaseous agents.

To cope with this phenomenon it has been a common practice to include a gettering material in the plenum within the sealed fuel container to take up or combine with the fission produced gases enclosed within the fuel container. Getter materials of a variety of compositions and in diverse physical getter forms and retaining means for such getters within the plenum area of the fuel element have been employed or proposed as exemplified by the prior art. For example, note U.S. Letters Patent No. 3,804,709, issued April 16, 1974; No. 3,898,125, issued August 5, 1975; No. 3,899,392, issued August 12, 1975; No. 3,899,392, issued August 12, 1975; No. 3,963,566, issued June 15, 1976; No. 3,969, 185, issued July 13, 1976; No. 3,988,075, issued October 26, 1976; No. 3,993, 453, issued November 23, 1976; and No. 4,200,460, issued April 29, 1980.

The disclosure and contents of each of the foregoing prior art patents, which illustrate the state of the art relevant to the invention disclosed and claimed herein, are incorporated herein by reference.

A particularly significant potentially debilitating condition attributable to gaseous fission products is the occurrence of gaseous hydrogenous material released during initial fissioning fuel heat up and continuing fission operation. The hydrogenous materials are prone to attack the zirconium alloy of the fuel container and related components, causing hydrating, which in time can lead to fuel container debilitation and possibly failure.

## SUMMARY OF THE INVENTION

This invention comprises an improvement in nuclear fission fuel elements comprising fuel containers housing fissionable fuel material and a gettering component for capturing and holding gaseous fission products. The invention consists of an improved means for retaining the gettering material positioned within the plenum area of the fuel element and which is receptive to easy entry of fluid vapors to enable the gettering material to take up and retain fission produced gases.

## OBJECTS OF THE INVENTION

It is a primary object of this invention to provide an improved nuclear fission fuel element for service in nuclear fission reactor plants.

It is a further object of this invention to provide a nuclear fission fuel element containing a gaseous fission product absorbing getter material.

It is a still further object of this invention to provide a nuclear fission fuel element containing a gettering material having an improved means for housing and securing the getter within the fuel element.

It is also an object of this invention to provide an enhanced retainer for housing getter materials within nuclear fuel elements having effective gas permeability for the easy entry of gases into the retainer and contact with the gettering material for absorption thereof.

It is an additional object of this invention to provide a enclosing retainer for gettering material for nuclear reactor fuel elements having closure means of gas permeable, porous metal bodies.

## BRIEF DESCRIPTION OF THE DRAWING

Figure 1 is an elevation or longitudinal view, partly in cross-section, of a nuclear fuel element housing a column of pellets of nuclear fuel material and having a getter located within the plenum area above the fuel.

Figure 2 is a receptacle for getter material shown in half section having a gas permeable closure cap of porous metal.

Figure 3 is a receptacle for getter material shown in half section having a gas permeable capped metal sleeve housing.

Figure 4 is a receptacle for getter material shown in half section having a gas permeable metal sleeve housing having one integral end forming a cup.

## DETAILED DESCRIPTION OF THE INVENTION

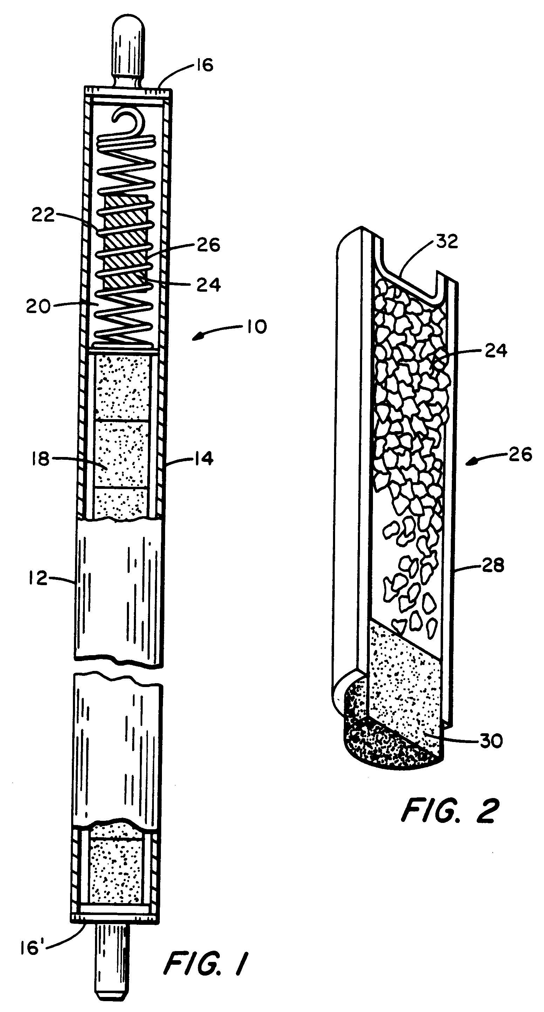

Referring to the drawings, in particular to Figure 1, there is shown a partially cutaway sectional view of a nuclear fission fuel element 10 for service in a power generating, water cooled nuclear fission reactor plant (not shown). The fuel element 10 comprises an elongated container 12 which typically consists of an elongated tube-like body 14, closed at both ends with welded in place upper and lower end plugs 16 and 16′ to provide a sealed enclosure for isolating the fuel confined therein.

The tube-like body 14 of the fuel container 12 commonly consists of a tube of an alloy of zirconium metal, and may contain a protective lining of unalloyed zirconium metal metallurgically bonded over the inner surface of the alloy tube 14 substrate.

Housed within the sealed fuel container 12 is a column or body of fissionable nuclear fuel material 18, typically in the form of a multiplicity of small cylindrical pellets stacked upon each other end-to-end. The diameter of the column of fuel units is usually of smaller diameter that the inside dimensions of the fuel container 12 to provide an intermediate space to accommodate fuel expansion during fission reactions.

Conventionally the column of fuel material 18 does not occupy the entire length of the tubular fuel containers 12, as shown. The pellets of fuel material 18 are included in the fuel container 12 in a column or body which does not extend the length of the fuel containers 12 to provide an upper end void space or plenum area 20. Plenum 20 enables longitudinal expansion space for the column of fuel and also provides an open space for the accumulation and retention of gaseous products released from the fuel material undergoing fission and irradiation.

Preferably a retainer means such as a spring 22 is employed positioned within the plenum 20 to preclude unrestrained axial movement of the fuel pellet 18 column; especially during handling and transportation of the fuel element 10.

Getter material 24, such as the getter compositions disclosed in the above cited prior art, is utilized to absorb gaseous fission products, including hydrogenous materials released during heat up of the fuel and fission during operation of the nuclear reactor plant. The getter material 24, in various physical forms as set forth in the said prior art, including metal particles such as chips, strands, granules and the like to extend surface area, is typically located in the plenum area 20 of the sealed fuel container 12 above the column of fissionable fuel IB. Being normally in discrete particulate form, the getter material is commonly housed within a retaining vessel provided with a suitable opening, or openings, to enable communication between the plenum atmosphere and the getter material and in turn free access or entry of gases into the retaining vessel and thus the exposure of such gases to the gettering material housed within the vessel for their capture and adherence. For example, particulate getter material is retained in a capsule-like vessel, or tube-like sleeve provided with suitable retaining end caps such as metal screens. Such retaining vessels or other holding means are commonly surrounded by and/or secured to the fuel retaining spring 22 in the plenum area 20, as in frequently shown in the foregoing prior art patents.

In accordance with this invention a suitable retaining vessel 26 for housing particulate getter material 24 within the plenum 20 of a fuel container 12, such as a tubular sleeve 28 of stainless steel or other suitable metal, is provided with at least a section or component thereof, such as one closure or particle restraining end cap 30, consisting of a porous continuous body of metal permitting effective fluid communication between the plenum atmosphere and the particles of getter material 24 housed within the vessel 26. For example, the end cap(s) 30 of this invention for closing one or both of then ends of a tubular sleeve or capsule getter retaining vessel 26 consist of vapor porous, monolithic bodies of metal aptly designed or configured to be affixed to or within an open end of the tubular sleeve or capsule vessel 26. The porous body of metal for an end cap or the like component can be molded or machined to be installed with a press fit within an end of the vessel 26, which eliminates any need for welding or utilizing added securing measures. Nevertheless, welding is within the scope of the invention as well as swaging, screw threads and the like conventional securing means.

The end cap or caps 30 for the invention, for example, can be designed to be fit telescope-like within the end opening of the sleeve vessel 26, or with an annular flange to extend out over the end edge portion of the sleeve vessel opening.

The porous section or component of this invention, such as the end caps 30 which provide a gas permeable and particle retaining closure for the getter retaining vessels 26, comprise a continuous or monolithic body of metal permeated throughout with an internal network of interconnecting open pores or channels providing minute tortuous passages extending therethrough. The interconnecting pores permeating throughout the body of metal are sized an average of from less than about 0.5 microns up to about 100 microns to foster easy gas communication or passage through the body of metal. Preferably the average pore size ranges form about 0.5 micron up to about 75 microns.

Getter enclosing means with porous sections or components, such as end caps 30, formed of a continuous body of metal permeated throughout with a network of interconnecting open pores providing minute tortuous gas transmitting passages extending therethrough can be produced by means of several different metal working techniques. For instance, such porous bodies of metal can be provided by heat sinter fusing a consolidated mass of discrete metal particles or granules into a single monolithic unit having a network of interstitial pore passages extending therethrough. Sponge metal forming metallurgical techniques can be employed to supply monolithic pore containing metal units. Also, a porous mass of metal for the practice of this invention, among other means, can be provided by introducing and dispersing small bubbles of a suitable nonreactive gas into molten metal and solidifying the mixture of metal and gas induced pores.

End caps 30 produced by such metallurgical procedure in accordance with the specifications of this invention provide effective fluid communication between the plenum atmosphere of the fuel element and the getter material vessel whereby fission produced gases have ready access to the getter material housed within a vessel for absorption and retention.

A tubular sleeve vessel 28 can be provided with such a porous cap 30 at either or both ends to retain the particulate getter material 24. When only one such porous cap 30 is utilized, the other end of the sleeve or capsule vessel 28 can be closed with any suitable means of shutting off the other end. For example a non-porous plug or cap.

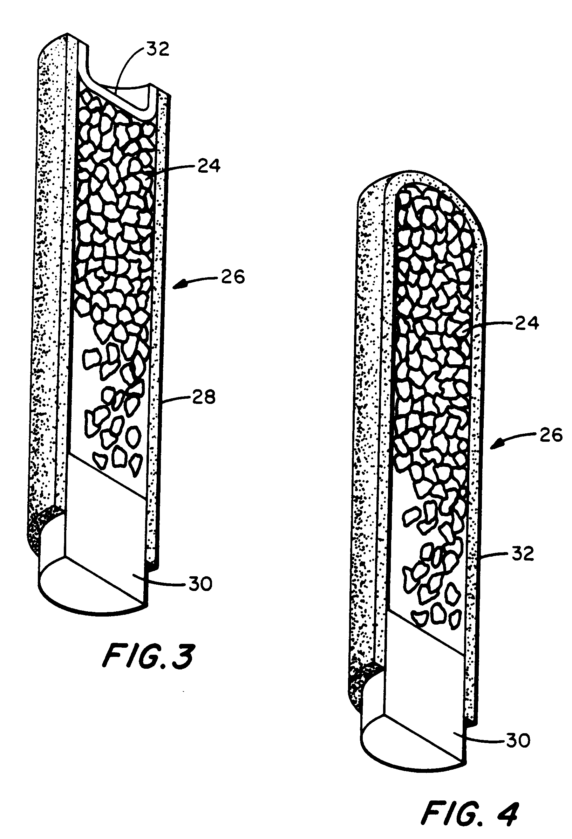

Referring to Figure 3 of the drawings, another embodiment of this invention comprises forming the getter material retaining vessel 26 of a porous metal tubular sleeve 28 of the foregoing described properties. End caps 30 for the porous metal tubular sleeve 28 can be either nonporous or porous.

A further embodiment, as shown in Figure 4 of the drawings, comprises providing a cup-like vessel 32 for the getter material retaining vessel 26 which is composed of porous metal of the foregoing described properties.

## Claims

1. A nuclear fission fuel element comprising an elongated tubular container, a body of fissionable nuclear fuel material disposed within and partially filling said tubular container and thereby providing an internal plenum area, an end plug integrally secured sealing each end of said tubular container, a spring member abutting said body of fissionable nuclear fuel material thereby serving to maintain the position of said body of fissionable nuclear fuel material in said tubular fuel container, and disposed within the plenum area a reactive gas collecting particulate gettering material enclosed and retained within a capped metal vessel housing wherein at least one component of the capped metal vessel consists of a continuous body of metal permeated throughout with interconnected open pores average sized from less than about 0.5 microns up to about 100 microns whereby fluids readily pass through said porous component of the capped metal vessel providing for entry of gaseous fission products into the capped metal vessel housing for absorption by the gettering material enclosed therein.

2. The nuclear fission fuel element of claim 1, wherein the porous metal component of the capped metal vessel comprises an end cap.

3. The nuclear fission fuel element of claim 1, wherein the porous metal component of the capped metal vessel comprises the tubular sleeve housing.

4. The nuclear fission fuel element of claim 1, wherein the porous metal component of the capped metal vessel comprises a porous tubular housing having one integral end portion forming a cup.

5. The nuclear fission fuel element of claim 1, wherein the porous end caps of a continuous body of metal is formed by sinter fusing a consolidated mass of metal particles.

6. The nuclear fission fuel element of claim 1, wherein the porous end caps of a continuous body of metal comprises a unit of sponge metal.

7. The nuclear fission fuel element of claim 1, wherein the gettering material housing comprises stainless steel.

8. The nuclear fission fuel element of claim 5, wherein the porous end cap of a continuous body of metal is formed by sinter fusing a consolidated mass of metal particles.

9. The nuclear fission fuel element of claim 5, wherein the porous end cap of a continuous body of metal comprises a unit of sponge metal.

10. The nuclear fission fuel element of claim 5, wherein the interconnected open pores of the porous end cap are average sized form less than about 0.5 microns up to about 75 microns.

FIG. 1

FIG. 2

FIG.3

FIG. 4

**European Patent Office**

**EUROPEAN SEARCH REPORT**

Application Number

EP 92 30 3057

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 326 009 (KWU)<br>* page 3, line 16 - page 4, line 21 *<br>* figures 1-2 * | 1-2,7 | G21C3/17 |
| A | US-A-4 362 564 (J.C. DANKO)<br>* column 1, line 31 - line 59 * | 5,8,10 | |
| A | FR-A-2 012 583 (BABCOCK & WILCOX)<br>* page 3, line 11 - line 35; figure * | 6,9 | |
| D,A | US-A-3 988 075 (PENROSE ET AL.)<br>* column 5, line 1 - line 47 *<br>* column 6, line 10 - line 15 *<br>* figures 2-3 * | 1-2 | |
| D,A | US-A-3 899 392 (GROSSMAN ET AL.)<br>* column 5, line 3 - line 19 *<br>* figures 2-3 * | 1,3 | |
| | | | TECHNICAL FIELDS SEARCHED (Int. Cl.5)<br><br>G21C |

The present search report has been drawn up for all claims

| Place of search | Date of completion of the search | Examiner |
|---|---|---|
| THE HAGUE | 01 JULY 1992 | CAPOSTAGNO E. |

EPO FORM 1503 03.82 (P0401)